# EUROPEAN PATENT APPLICATION

(11) **EP 4 678 450 A1**
(43) Date of publication of application: **14.01.2026**
(21) Application number: 24187088.0
(22) Date of filing: 08.07.2024
(51) Int. Cl.: B60K 35/10, B60K 35/233, B60K 35/29, B60K 35/65, B60K 35/81, G02B 27/01

(54) **METHOD FOR CONTROLLING A HEAD-UP DISPLAY OF A VEHICLE, DATA PROCESSING APPARATUS, COMPUTER PROGRAM, COMPUTER-READABLE STORAGE MEDUIM, SYSTEM FOR CONTROLLING A HEAD-UP DISPLAY, AND VEHICLE**

(71) Applicant: Volvo Car Corporation, 405 31 Göteborg (SE)
(72) Inventor: YASARI, Ehsan, 40531 Göteborg (SE)
(74) Representative: Maiwald GmbH

(57) **Abstract**

The disclosure relates to a method for controlling a head-up display of a vehicle (10). The method comprises obtaining first data (D1) indicative of a user action, obtaining second data (D2) indicative of one control mode out of at least two control modes of the head-up display and causing one or more of adjusting a total size of a content displayable by the head-up display, adjusting a size of a content element displayable by the head-up display, and adjusting a zoom of a content element displayable by the head-up display based on the first data (D1) and based on the second data (D2). Moreover, the disclosure relates to a corresponding data processing apparatus (20), a corresponding computer program (38), and a corresponding computer-readable storage medium (36). Furthermore, the disclosure is directed to a system (25) for controlling a head-up display of a vehicle (10) and to a vehicle (10) comprising such system (25).

## Description

### TECHNICAL FIELD

The present disclosure relates to a method for controlling a head-up display of a vehicle. Moreover, the disclosure relates to a data processing apparatus, a computer program and a computer-readable storage medium configured for carrying out the method for controlling the head-up display of a vehicle.

Furthermore, the disclosure is directed to a system for controlling a head-up display of a vehicle and to a vehicle comprising said system.

### BACKGROUND ART

A head-up display is a well-known means for holographically providing information to a driver of a vehicle. A head-up display does not necessarily require the driver to take his or her view off the road on which the vehicle is traveling while perceiving information provided by the head-up display. This provides for driver comfort and road safety.

### SUMMARY

Current head-up displays are static, meaning that their configuration cannot be changed. However, a user of the vehicle may want to adjust the head-up display of a vehicle to his or her own needs. Hence, there may be a need for an adjustable head-up display and a method to control such head-up display.

The problem is at least partially solved or alleviated by the subject matter of the independent claims of the present disclosure, wherein further examples are incorporated in the dependent claims.

According to a first aspect, there is provided a method for controlling a head-up display of a vehicle. The method comprises:
- obtaining first data indicative of a user action,
- obtaining second data indicative of one control mode out of at least two control modes of the head-up display,
- causing one or more of adjusting a total size of a content displayable by the head-up display, adjusting a size of a content element displayable by the head-up display, and adjusting a zoom of a content element displayable by the head-up display based on the first data and based on the second data.

Obtaining first data indicative of a user action is to be understood as receiving or determining the first data. The user action may be an operation of a control element, a facial expression, a gesture and/or a voice command made by a user of the vehicle. Likewise, obtaining second data indicative of one control mode out of at least two control modes of the head-up display comprises receiving or determining the second data. A control mode of the head-up display is a mode wherein the user action has a distinct control effect on the head-up display. Hence, at least two control modes of the head-up display involve that the same user action has at least two different control effects on the head-up display depending on the selected control mode. According to the present disclosure, one of the different control effects on the head-up display may be the adjustment of the total size of the content displayable by the head-up display. This means that the size of the entire content displayable to the user of the vehicle on the head-up display is reduced or increased. This may involve that a zoom of the entire content displayed on the head-up display may be reduced or increased, respectively. However, in an alternative, this may involve that the zoom of the entire content on the head-up display remains the same. In this alternative, more or less information may be displayed on the head-up display, respectively. Another control effect on the head-up display may be the adjustment of the size of a content element displayable by the head-up display. As opposed to adjusting the size of the entire content displayable on the head-up display, this means that the size of only one or more content elements displayable by the head-up display is be reduced or increased. A content element, thus, may be regarded as a portion of the content. This way, more or less information may be displayed by the content element of the head-up display. Still another control effect on the head-up display is the adjustment of a zoom of the content element displayable by the head-up display. In this case, a zoom of the content element is reduced or increased. Reducing or increasing size and/or zoom are based on the first data indicative of the user action. The selection of the control mode of the head-up display is based on the second data. Like the first data, the second data may be indicative of an operation of a control element, a facial expression, a gesture and/or a voice command made by the user of the vehicle. This has the effect that the user of the vehicle may adjust parts of or even the entire content displayable on the head-up display to his or her own needs and preferences. For example, the user of the vehicle may wish to display a map in an increased size and/or using an increased zoom. Alternatively, the user of the vehicle may prefer an undistracted view on the road ahead of the vehicle and consequently may reduce the size and/or a zoom of parts of the displayable content or even the entire content displayable on the head-up display. This way, user comfort is increased and road safety is enhanced.

In an example, one control mode out of the at least two control modes is associated with adjusting the total size of the content displayable by the head-up display. Additionally or alternatively, one control mode out of the at least two control modes is associated with adjusting the size of the content element displayable by the head-up display. Further additionally or alternatively, one control mode out of the at least two control modes is associated with adjusting the zoom of the content element displayable by the head-up display. In other words, in one control mode, the size of the entire content displayable by the head-up display can be adjusted. In another control mode, the size and/or zoom of parts of the content displayable by the head-up display are adjusted. By selecting one of the at least two control modes, this allows the user of the vehicle to even more precisely adjust the content displayed on the head-up display to his or her needs and preferences.

In an example, the first data comprises a direction information indicative of a direction of the user action, wherein the total size of the content displayable by the head-up display, the size of the content element displayable by the head-up display and/or the zoom of the content element displayable by the head-up display are adjusted based on the direction information. The direction information may particularly be comprised in the first data if the user action comprises an operation of a control element and/or a gesture made by a user of the vehicle. A control element of the vehicle, for example a rotary knob, a scroll wheel, a slider or a lever, may be manipulated into different directions, e.g. upwards, downwards, clockwise, counter-clockwise or to the sides. Likewise, a gesture of the user of the vehicle may involve moving a hand upwards, downwards or to the sides. Alternatively, the gesture may involve pointing a finger to one side. Exemplarily, a user action oriented downwards or to the left may cause a reduction in size and/or a zoom of either parts of the displayable content or the entire content displayable on the head-up display. Additionally or alternatively, a user action oriented upwards or to the right may cause an increase in size and/or in zoom of either parts of the displayable content or the entire content displayable on the head-up display. Thus, the user of the vehicle can intuitively and in a simple manner adjust the size and/or the zoom of either parts of the displayable content or the entire content displayable on the head-up display. This ensures a low level of distraction of the user of the vehicle from traffic events while driving.

In an example, the method further comprises storing third data indicative of the total size of the content displayable by the head-up display, the size of the content element displayable by the head-up display and/or the zoom of the content element displayable by the head-up display. Storing a particular setting indicative of size and/or zoom of either parts of the displayable content or the entire content displayable on the head-up display allows restoring the particular setting of the head-up display on demand at a later point in time. In this context, "on demand" may involve an active request from the user of the vehicle, a duration that the user has been travelling in the vehicle on one journey, a current time of day or a brightness of daylight in an environment in which the vehicle is travelling. For example, the user of the vehicle may prefer an increased size and/or zoom of either parts of the displayable content or the entire content of the head-up display while driving in an urban environment. The user of the vehicle may appreciate more clearly recognizable instructions of a navigation system on the head-up display while driving in an urban environment due to more frequent turns that the user of the vehicle has to initiate compared to driving in a rural environment or on a highway. In another example, it may be beneficial for road safety to provide the user of the vehicle with an undistracted view of the road ahead of the vehicle when the user of the vehicle has already been driving for a long period of time, is driving at night and/or is driving in poor visibility conditions. Thus, the size of either parts of the displayable content or the entire content displayable on the head-up display may have to be reduced in such situations.

In an example, the method comprises obtaining fourth data indicative of a user identity of a user of the vehicle and causing one or more of adjusting a total size of a content displayable by the head-up display, adjusting a size of a content element displayable by the head-up display, and adjusting a zoom of a content element displayable by the head-up display based on the fourth data. The fourth data may be obtained through a camera that provides an image or a video sequence of the current user of the vehicle. Image recognition may be performed based on the image or video sequence. Additionally or alternatively, the fourth data may be obtained through a microphone arranged in the interior of the vehicle gathering a voice recording from the current user of the vehicle and speech recognition based thereon. Further additionally or alternatively, the fourth data may be obtained from a dongle, such as a personalized key to the vehicle, which the user of the vehicle is carrying with him or her. Further additionally or alternatively, the fourth data may be obtained from a weight sensor mounted inside a driver's seat of the vehicle. If a user of the vehicle takes his or her seat on the driver's seat, his or her identity may be recognized from his or her weight. It is to be understood that the fourth data may be stored along with the above-mentioned third data. Thus, if an identity of a user of the vehicle is recognized, the size and/or the zoom of either parts of the displayable content or the entire content displayable on the head-up display may be automatically adjusted to match the setting of the head-up display to an adjustment that that the particular user has made before. For example, the most recent adjustment that that particular user has made to the head-up display before may be restored. This saves the user of the vehicle time when making the vehicle ready for departure, particularly when several people - which may prefer different settings of the head-up display - regularly use the same vehicle. Thus, user comfort is enhanced. Moreover, the user of the vehicle does not need to manually adjust the head-up display to his or her personal needs and preferences, which avoids distraction of the user from traffic events. This is beneficial in terms of road safety.

In an example, the content element displayable by the head-up display comprises a map of a navigation system. Adjusting the size and/or the zoom of the map of the navigation system in different traffic environments, e.g. an urban area, a rural area or a highway, may facilitate recognizing a current location of the vehicle for the user of the vehicle. The map of the navigation system may further comprise an indication of a route that the user of the vehicle wants to follow to reach a desired destination. Particularly if driving in an area that is new to the user of the vehicle, the user may want to increase a size and/or a zoom of the map of the navigation system in order to be able to more easily identify which driving directions to take.

According to a second aspect, there is provided a data processing apparatus comprising means for carrying out the method of the first aspect. The data processing apparatus may be attached to or housed in a vehicle comprising a head-up display. Using such a data processing apparatus, the head-up display of the vehicle may be controlled in a reliable manner. Particularly, the data processing apparatus allows adjusting a total size of a content displayable by the head-up display, a size of a content element displayable by the head-up display and/or a zoom of a content element displayable by the head-up display based on a user action and depending on a selected control mode out of at least two control modes of the head-up display. This allows a user of the vehicle to adjust parts of or even the entire content displayed on the head-up display to his or her own needs and preferences. For example, the user of the vehicle may wish to display a map in an increased size and/or using an increased zoom. Alternatively, the user of the vehicle may prefer an undistracted view on the road ahead of the vehicle and consequently may reduce the size and/or the zoom of parts of the displayable content or even the entire content displayable on the head-up display. This way, user comfort is increased and road safety is enhanced.

According to a third aspect, there is provided a computer program comprising instructions which, when the computer program is executed by a computer, cause the computer to carry out the method of the first aspect. Using such a computer program, a head-up display of a vehicle may be controlled in a reliable manner. Particularly, the computer program allows adjusting a total size of a content displayable by the head-up display, a size of a content element displayable by the head-up display and/or a zoom of a content element displayable by the head-up display based on user action and depending on a selected control mode out of at least two control modes of the head-up display. This allows a user of the vehicle to adjust parts of or even the entire content displayed on the head-up display to his or her own needs and preferences. For example, the user of the vehicle may wish to display a map in an increased size and/or using an increased zoom. Alternatively, the user of the vehicle may prefer an undistracted view on the road ahead of the vehicle and consequently may reduce the size and/or the zoom of parts of the displayable content or even the entire content displayable on the head-up display. This way, user comfort is increased and road safety is enhanced.

According to a fourth aspect, there is provided a computer-readable storage medium comprising instructions which, when executed by a computer, cause the computer to carry out the method of the first aspect. Using such a computer-readable storage medium, a head-up display of a vehicle may be controlled in a reliable manner. Particularly, the computer-readable storage medium allows adjusting a total size of a content displayable by the head-up display, a size of a content element displayable by the head-up display and/or a zoom of a content element displayable by the head-up display based on user action and depending on a selected control mode out of at least two control parts of the head-up display. This allows a user of the vehicle to adjust parts of or even the entire content displayed on the head-up display to his or her own needs and preferences. For example, the user of the vehicle may wish to display a map in an increased size and/or using an increased zoom. Alternatively, the user of the vehicle may prefer an undistracted view on the road ahead of the vehicle and consequently may reduce the size and/or a zoom of parts of the displayable content or even the entire content displayable on the head-up display. This way, user comfort is increased and road safety is enhanced.

According to a fifth aspect, there is provided a system for controlling a head-up display of a vehicle. The system comprises:
- a first control element for generating first data indicative of a user action,
- a second control element for generating second data indicative of one control mode out of at least two control modes of the head-up display, and
- a data processing apparatus according to the second aspect.

The first control element and the second control element are communicatively connected to the data processing apparatus. Moreover, the data processing apparatus comprises a communication interface for causing one or more of adjusting a total size of a content displayable by the head-up display, adjusting a size of a content element displayable by the head-up display and adjusting a zoom of a content element displayable by the head-up display. To this end, the data processing apparatus may be connectable to a projector for the head-up display via its communication interface. The projector may project content displayable on the head-up display on a pane of transparent glass, e.g. a windshield of a vehicle, or on a separate pane of glass arranged between the windshield and a user of the vehicle. The projector may receive communication commands from the data processing apparatus to adjust the size and/or the zoom of parts of the displayable content or the entire content displayable on the head-up display. The first control element and/or the second control element may comprise a rotary knob, a scroll wheel, a slider, a pushbutton or a lever that may be manipulated into different directions by a user of the vehicle, e.g. upwards, downwards, clockwise, counter-clockwise or to the sides. Additionally or alternatively, the first control element and/or the second control element may be a camera that captures a facial expression and/or a gesture of the user of the vehicle. Further additionally or alternatively, the first control element and/or the second control element may be a microphone arranged in the interior of the vehicle for capturing a voice command from the user of the vehicle. Through these control elements, the user of the vehicle is enabled to provide commands to the data processing apparatus for adjusting a size and/or a zoom of either parts of the displayable content or the entire content displayable on the head-up display. This allows a user of the vehicle to adjust parts of the displayable content or even the entire content displayed on the head-up display to his or her own needs and preferences. For example, the user of the vehicle may wish to display a map in an increased size and/or using an increased zoom. Alternatively, the user of the vehicle may prefer an undistracted view on the road ahead of the vehicle and consequently may reduce the size and/or the zoom of parts of the displayable content or even the entire content displayable on the head-up display. This way, user comfort is increased and road safety is enhanced.

In an example, the first control element and/or the second control element are mountable on a steering wheel of the vehicle. In this particular example, the first control element and/or the second control element may be provided in the form of a rotary knob, a scroll wheel, a slider, a pushbutton and/or a lever mountable on the steering wheel of the vehicle. This allows the user of the vehicle to easily reach the first control element and/or the second control element while driving. Hence, distraction from traffic is reduced to a minimum while the user of the vehicle adjusts the size and/or the zoom of parts of the displayable content or the entire content displayable on the head-up display.

In an example, the first control element and the second control element are formed by one integral control element configured for generating both first data indicative of a user action and second data indicative of one control mode out of at least two control modes of the head-up display. In this particular example, the one integral control element may be a rotatable knob or a scroll wheel with an integrated function of a pushbutton or a slider with an integrated function of a pushbutton. By providing an integral control element that comprises the functions of the first control element and the second control element, the user of the vehicle is able to reach the first control element and the second control element by a single movement of his or her fingers or hand. Thus, the control mode can easily be selected by the user. Moreover, the user action indicating if the size and/or the zoom of either parts of the displayable content or the entire content displayable on the head-up display shall be increased or reduced can be provided by the user in a simple manner.

In an example, the integral control element comprises an actuation element actuatable by the user which is both rotatable and translatable and/or which is rotatable around two different axes of rotation and/or which is translatable in two different directions. An integral control element that is both rotatable and translatable may be realized by a scroll wheel that can both be scrolled and pushed. In other words, this particular integral control element is a combination of a scroll wheel and a pushbutton. First data indicative of the user action may be provided by scrolling the scroll wheel in a particular direction and second data indicative of the control mode may be provided by pushing the scroll wheel. An integral control element that is rotatable around two different axes of rotation may be realized by a sphere-shaped knob. The two axes of rotation may be perpendicular to each other. A rotation of the knob around a first one of the two axes of rotation may provide the first data indicative of the user action. A rotation of the knob around a second one of the two axes of rotation may provide the second data indicative of the control mode. An integral control element that is translatable into different directions may be realized by a slider element that can be slid in one direction and pushed in another direction. In an example, the two different directions may be oriented perpendicularly to each other. Sliding the slider along a first one of the two directions may provide the first data indicative of the user action. Pushing the slider along a second one of the two directions may provide the second data indicative of the control mode. Thus, the control mode can easily be selected by the user. Moreover, the user action indicating whether the size and/or the zoom of either parts of the displayable content or the entire content displayable on the head-up display shall be increased or reduced can be provided by the user in a simple manner.

According to a sixth aspect, there is provided a vehicle comprising a system for controlling a head-up display according to the fifth aspect. Providing such a vehicle allows a user of the vehicle to adjust a total size of a content displayable by the head-up display, a size of a content element displayable by the head-up display and/or a zoom of a content element displayable by the head-up display based on a user action and depending on a selected control mode out of at least two control modes of the head-up display. This allows a user of the vehicle to adjust parts of or even the entire content displayed on the head-up display to his or her own needs and preferences. For example, the user of the vehicle may wish to display a map in an increased size and/or using an increased zoom. Alternatively, the user of the vehicle may prefer an undistracted view on the road ahead of the vehicle and consequently may reduce the size and/or a zoom of parts of the displayable content or even the entire content displayable on the head-up display. This way, user comfort is increased and road safety is enhanced.

In an example, the first control element and the second control element are mounted on a steering wheel of the vehicle. In this particular example, the first control element and/or the second control element may be provided in the form of a rotary knob, a scroll wheel, a slider and/or a lever mounted on the steering wheel of the vehicle. This allows the user of the vehicle to easily reach the first control element and/or the second control element while driving. In this context, the steering wheel should not only be understood as a classical steering wheel in the form of a wheel alone but as any means for enabling the user of the vehicle to communicate steering commands to the mechanics of the vehicle, e.g. a yoke or a control stick. Hence, distraction from traffic is reduced to a minimum while the user of the vehicle adjusts the size and/or the zoom of parts of the displayable content or the entire content displayable on the head-up display.

The method of the present disclosure may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle according to the present disclosure comprising a data processing apparatus according to the present disclosure for executing a method according to the present disclosure for controlling a head-up display of the vehicle,
- Figure 2: shows a first example of a steering wheel of the vehicle of Figure 1 comprising an integral control element comprising an actuation element that is both rotatable and translatable,
- Figure 3: shows a second example of a steering wheel of the vehicle of Figure 1 comprising an integral control element comprising an actuation element that is rotatable around two different axes of rotation,
- Figure 4: shows a third example of a steering wheel of the vehicle of Figure 1 comprising an integral control element comprising an actuation element that is translatable in two different directions,
- Figure 5: shows a head-up display of the vehicle of Figure 1 in an initial state,
- Figure 6: shows the head-up display of the vehicle of Figure 1 in a first adjusted state, wherein a total size of a content displayable by the head-up display is increased as compared to the initial state shown in Figure 5,
- Figure 7: shows the head-up display of the vehicle of Figure 1 in a second adjusted state, wherein a size of a content element displayable by the head-up display is increased as compared to the initial state shown in Figure 5,
- Figure 8: shows the head-up display of the vehicle of Figure 1 in a third adjusted state, wherein a zoom of a content element displayable by the head-up display is increased as compared to the initial state shown in Figure 5,
- Figure 9: shows steps of a method according to the present disclosure for controlling the head-up display of the vehicle of Figure 1.

### DETAILED DESCRIPTION

The Figures are merely schematic representations and serve only to illustrate examples of the disclosure. Identical or equivalent elements are in principle provided with the same reference signs.

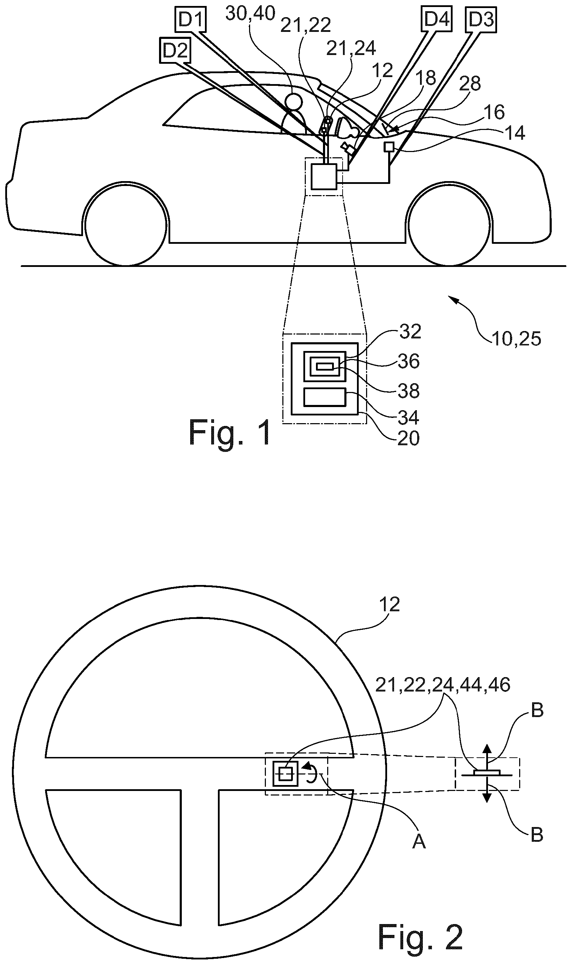

Figure 1 shows a vehicle 10.

The vehicle 10 comprises a steering wheel 12, a projector 14 for a head-up display 16, a camera 18 and a data processing apparatus 20.

Moreover, the vehicle 10 comprises two actuation elements 21, namely a first control element 22 and a second control element 24 mounted to the steering wheel 12.

The first control element 22, the second control element 24 and the data processing apparatus 20 form a system 25 for controlling the head-up display 16 of the vehicle 10.

The first control element 22, the second control element 24, the camera 18 and the projector 14 for the head-up display 16 are communicatively connected to the data processing apparatus 20.

The projector 14 for the head-up display 16 projects content 26 displayable on the head-up display 16 onto a pane 28 of glass of the vehicle 10.

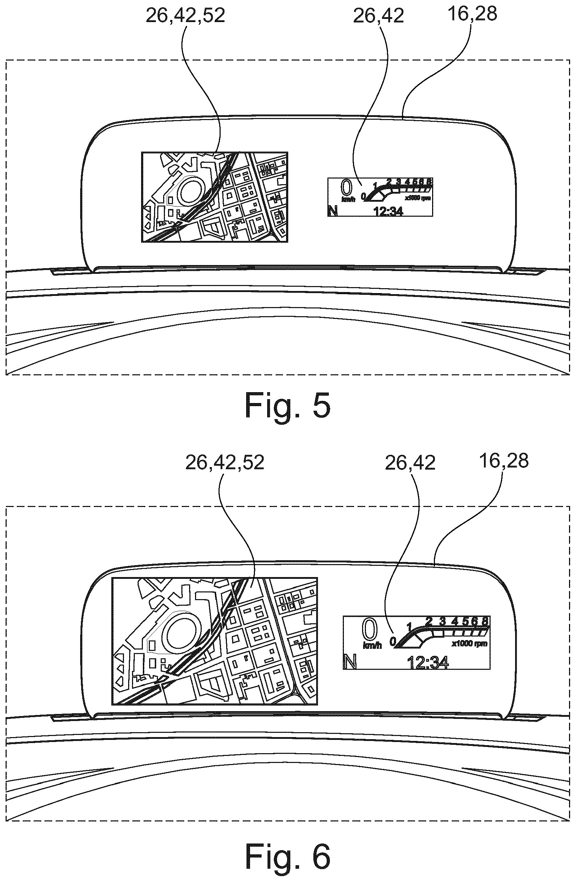

The pane 28 of glass may be a windshield of the vehicle 10. However, in the present examples, the pane 28 of glass is a separate pane 28 arranged between the windshield of the vehicle and a user 30 of the vehicle (see also Figures 5 to 8).

The data processing apparatus 20 comprises a data storage unit 32 and a data processing unit 34.

The data storage unit 32 comprises a computer-readable storage medium 36.

On the computer-readable storage medium 36, there is provided a computer program 38.

The computer program 38 and, thus, also the computer-readable storage medium 36, comprise instructions which, when executed by the data processing unit 34, or, more generally speaking, a computer, cause the computer or the data processing unit 34 to carry out a method for controlling the head-up display 16 of the vehicle 10.

Consequently, the data storage unit 32 and the data processing unit 34 form means for carrying out the method for controlling the head-up display 16 of the vehicle 10.

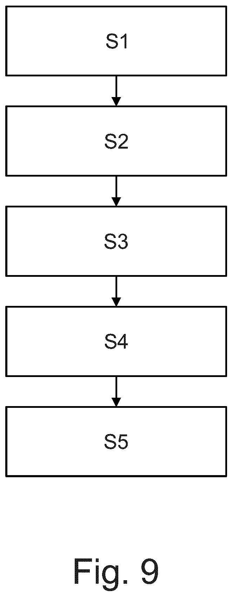

An exemplary illustration of steps of the method for controlling the head-up display 16 of the vehicle 10 is given in Figure 9.

The first control element 22 and the second control element 24 can be actuated by the user 30 of the vehicle 10.

In the present example, the user 30 of the vehicle is a driver 40 of the vehicle 10. Thus, the first control element 22 and the second control element 24 can be actuated by the driver 40 of the vehicle 10 while driving.

If the driver 40 of the vehicle 10 actuates the first control element 22, first data D1 is generated (see step S1 in Figure 9). This first data D1 is received by the data processing apparatus 20. Based thereon and when in a first control mode, the data processing apparatus 20 sends signals to the projector 14 of the head-up display 16 to adjust a total size of the content 26 displayable on the head-up display 16. In other words, adjustment of a total size of the content 26 displayable on the head-up display 16 is caused based on the first data D1.

If the driver 40 of the vehicle 10 actuates the second control element 24, second data D2 is generated (step S2). This second data D2 is received by the data processing apparatus 20. Based thereon, the data processing apparatus 20 switches into a second control mode. If the data processing apparatus 20 is in the second control mode, an actuation of the first control element 22 causes the data processing apparatus 20 to send signals to the projector 14 of the head-up display 16 to adjust a size and/or a zoom of a content element 42 displayable by the head-up display 16.

The data processing apparatus 20, more particularly, the data storage unit 32 of the data processing apparatus 20 also stores third data D3 indicative of a setting of the total size of the content 26 displayable by the head-up display 16, the size of the content element 42 displayable by the head-up display 16 and/or the zoom of the content element 42 displayable by the head-up display 16 (step S3).

The data processing apparatus 20 further obtains fourth data D4 indicative of an identity of the driver 40 of the vehicle 10 (step S4). The identity information may be obtained through image recognition from an image or a video sequence of the driver 40 captured by the camera 18. The fourth data D4 may be stored alongside the third data D3 on the data storage unit 32 of the data processing apparatus 20.

This way, in case the same driver 40 enters the vehicle 10 after a given period of absence, the adjustments that that particular driver 40 has made before concerning the total size of the content 26 displayable by the head-up display 16, the size of the content element 42 displayable by the head-up display 16 and/or the zoom of the content element 42 displayable by the head-up display 16 may automatically be restored without further action from that particular driver 40 (step S5).

Figure 2 shows a first example of a steering wheel 12 of the vehicle 10.

On the steering wheel 12, an integral control element 44 is mounted that comprises the first control element 22 and the second control element 24.

In the present example, the integral control element 44 is a combination of a scroll wheel and pushbutton, a pushable scroll wheel 46 so to speak.

The pushable scroll wheel 46 can be rotated around its rotational axis A in a clockwise and in an counter-clockwise direction. The rotational axis A is oriented substantially radially with respect to the steering wheel 12.

Scrolling the pushable scroll wheel 46 in the counter-clockwise direction causes the total size of the content 26 displayable by the head-up display 16, the size of the content element 42 displayable by the head-up display 16 and/or the zoom of the content element 42 displayable by the head-up display 16 to be reduced.

Scrolling the pushable scroll wheel 46 in the clockwise direction causes the total size of the content 26 displayable by the head-up display 16, the size of the content element 42 displayable by the head-up display 16 and/or the zoom of the content element 42 displayable by the head-up display 16 to be increased.

Pushing the pushable scroll wheel 46 in a pushing direction B causes the data processing apparatus 20 to switch between a first control mode and a second control mode, wherein the first control mode is the default control mode, which is active when the pushable scroll wheel 46 has not been pushed, yet.

The pushing direction B of the pushable scroll wheel is illustrated in the detailed view on the right of Figure 2, which is a side view of the pushable scroll wheel 46.

In the first control mode, the total size of the content 26 displayable by the head-up display 16 is adjusted when the pushable a scroll wheel 46 is rotated.

In the second control mode, the size of the content element 42 displayable by the head-up display 16 and/or the zoom of the content element 42 displayable by the head-up display 16 is adjusted.

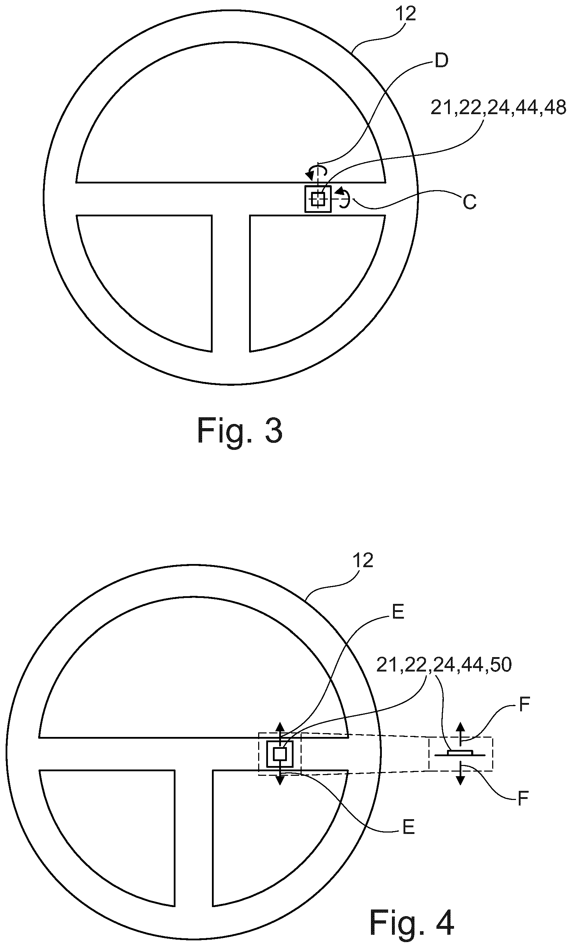

Figure 3 shows a second example of a steering wheel 12 of the vehicle 10. Only the differences with respect to the first example of the steering wheel 12 will be explained hereinafter.

In the present example, the integral control element 44 is a knob 48 that is rotatable around two different axes C, D of rotation.

The first rotational axis C of the knob 48 and the second rotational axis D of the knob 48 are perpendicular to each other. Moreover, the first rotational axis C extends substantially radially with respect to the steering wheel 12.

Rotating the knob 48 in the counter-clockwise direction around axis C causes the total size of the content 26 displayable by the head-up display 16, the size of the content element 42 displayable by the head-up display 16 and/or the zoom of the content element 42 displayable by the head-up display 16 to be reduced.

Rotating the knob 48 in the clockwise direction around axis C causes the total size of the content 26 displayable by the head-up display 16, the size of the content element 42 displayable by the head-up display 16 and/or the zoom of the content element 42 displayable by the head-up display 16 to be increased.

Rotating the knob 48 around axis D causes the data processing apparatus 20 to switch between the first control mode and the second control mode.

More specifically, rotating the knob 48 counter-clockwise around axis D causes the data processing apparatus 20 to switch into the first control mode. Rotating the knob 48 clockwise around axis D causes the data processing apparatus 20 to switch into the second control mode.

It is noted that it is also possible that the knob 48 is rotatable around axis D in only one direction. In this case, rotating the knob 48 around axis D may cause the data processing apparatus 20 to switch into the first control mode if the current mode is the second control mode and may cause the data processing apparatus 20 to switch into the second control mode if the current control mode is the first control mode.

Figure 4 shows a third example of a steering wheel 12 of the vehicle 10. Only the differences with respect to the first example of the steering wheel 12 will be explained hereinafter.

In the present example, the integral control element 44 is a slider 50 that is slidable in a sliding direction E and pushable in a pushing direction F. Thus, the slider 50 may be called a pushable slider 50.

The pushing direction F of the pushable slider 50 is illustrated in the detailed view on the right of Figure 4, which is a side view of the pushable slider 50.

The sliding direction E and the pushing direction F are perpendicular to each other.

Sliding the slider 50 in the downward direction along sliding direction E causes the total size of the content 26 displayable by the head-up display 16, the size of the content element 42 displayable by the head-up display 16 and/or the zoom of the content element 42 displayable by the head-up display 16 to be reduced.

Sliding the slider 50 in the upward direction along sliding direction E causes the total size of the content 26 displayable by the head-up display 16, the size of the content element 42 displayable by the head-up display 16 and/or a zoom of the content element 42 displayable by the head-up display 16 to be increased.

Pushing the slider 50 in the pushing direction F causes the data processing apparatus 20 to switch between the first control mode and the second control mode.

Figure 5 shows the head-up display 16 of the vehicle 10 in more detail.

The content 26 displayed on the head-up display comprises two content elements 42.

The content element 42 on the left-hand side is a map 52 of a navigation system of the vehicle 10.

The content element 42 on the right-hand side comprises detailed information on a current driving state of the vehicle 10, e.g. a traveling speed, an engine rotational speed and an engaged gear of the vehicle.

The state of the head-up display illustrated in Figure 5 will be denoted as an initial state in the following.

Figure 6 shows the head-up display 16 of the vehicle 10 in a first adjusted state.

In Figure 6, a total size of the content 26 displayable by the head-up display 16 is increased as compared to the initial state.

Taking the first example of the steering wheel 12 of Figure 2 as an example for a configuration of an integral control element 44, the pushable scroll wheel 46 has been rotated around its rotational axis A in an clockwise direction. Thus, the data processing apparatus 20 has been operating in the first control mode when adjusting the setting of the head-up display 16.

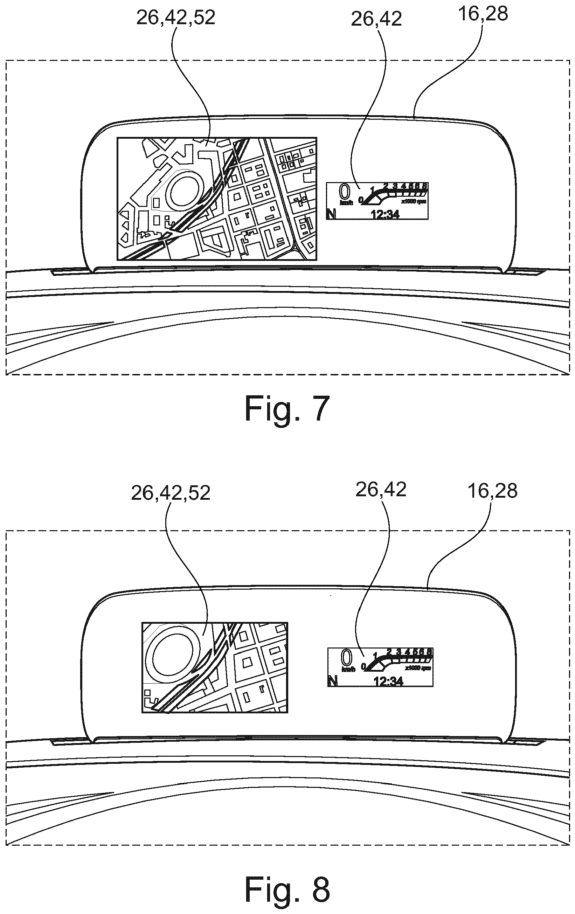

Figure 7 shows the head-up display 16 of the vehicle 10 in a second adjusted state.

In Figure 7, a size of the map 52 of the navigation system of the vehicle 10 displayable by the head-up display 10 is increased as compared to the initial state.

Again, taking the first exemplary steering wheel 12 of Figure 2 as an example for a configuration of an integral control element 44, the pushable scroll wheel 46 has been pushed first in its pushing direction B and then rotated around its rotational axis A in the clockwise direction. Thus, the data processing apparatus 20 has been operating in the second control mode when adjusting the setting of the head-up display 16.

Figure 8 shows the head-up display 16 of the vehicle 10 in a third adjusted state.

In Figure 8, a zoom of the map 52 of the navigation system of the vehicle 10 displayable by the head-up display 16 is increased as compared to the initial state.

Taking the first example of the steering wheel 12 of Figure 2 as an example for a configuration of an integral control element 44, the pushable scroll wheel 46 has been pushed first in its pushing direction B and then rotated around its rotational axis A in the clockwise direction. Thus, the data processing apparatus 20 has been operating in an alternative of the second control mode when adjusting the setting of the head-up display 16.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: steering wheel
- 14: projector
- 16: head-up display
- 18: camera
- 20: data processing apparatus
- 21: actuation element
- 22: first control element
- 24: second control element
- 25: system
- 26: content displayable on the head-up display
- 28: pane of glass
- 30: user
- 32: data storage unit
- 34: data processing unit
- 36: computer-readable storage medium
- 38: computer program
- 40: driver
- 42: content element displayable on the head-up display
- 44: integral control element
- 46: pushable scroll wheel
- 48: knob
- 50: pushable slider
- 52: map of navigation system

- A: rotational axis of pushable scroll wheel
- B: pushing direction of pushable scroll wheel
- C: first rotational axis of the knob
- D: second rotational axis of the knob
- E: sliding direction of pushable slider
- F: pushing direction of pushable slider

- D1: first data
- D2: second data
- D3: third data
- D4: fourth data

## Claims

1. A method for controlling a head-up display (16) of a vehicle (10), the method comprising
- obtaining first data (D 1) indicative of a user action (S 1),
- obtaining second data (D2) indicative of one control mode out of at least two control modes of the head-up display (16, S2),
- causing one or more of adjusting a total size of a content (26) displayable by the head-up display (16), adjusting a size of a content element (42) displayable by the head-up display (16), and adjusting a zoom of a content element (42) displayable by the head-up display (16) based on the first data (D1) and based on the second data (D2, S5).

2. The method according to claim 1, wherein one control mode out of the at least two control modes is associated with adjusting the total size of the content (26) displayable by the head-up display (16) and/or
wherein one control mode out of the at least two control modes is associated with adjusting the size of the content element (42) displayable by the head-up display (16) and/or the zoom of the content element (42) displayable by the head-up display (16).

3. The method according to any one of the preceding claims, wherein the first data (D1) comprises a direction information indicative of a direction of the user action, wherein the total size of the content (26) displayable by the head-up display (16), the size of the content element (42) displayable by the head-up display (16) and/or the zoom of the content element (42) displayable by the head-up display (16) are adjusted based on the direction information.

4. The method according to any one of the preceding claims, further comprising storing third data (D3) indicative of the total size of the content (26) displayable by the head-up display (16), the size of the content element (42) displayable by the head-up display (16) and/or the zoom of the content element (42) displayable by the head-up display (16, S3).

5. The method according to any one of the preceding claims, further comprising obtaining fourth data (D4) indicative of a user identity of a user (30) of the vehicle (10) and causing one or more of adjusting a total size of a content (26) displayable by the head-up display (26), adjusting a size of a content element (42) displayable by the head-up display (16), and adjusting a zoom of a content element (42) displayable by the head-up display (16, S4) based on the fourth data (D4).

6. The method according to any one of the preceding claims, wherein the content element (42) displayable by the head-up display (16) comprises a map (52) of a navigation system.

7. A data processing apparatus (20) comprising means for carrying out the method of any one of the preceding claims.

8. A computer program (38) comprising instructions which, when the computer program (38) is executed by a computer, cause the computer to carry out the method of claims 1 to 6.

9. A computer-readable storage medium (36) comprising instructions which, when executed by a computer, cause the computer to carry out the method of claims 1 to 6.

10. A system (25) for controlling a head-up display (16) of a vehicle (10), the system (25) comprising
- a first control element (22) for generating first data (D 1) indicative of a user action,
- a second control element (24) for generating second data (D2) indicative of one control mode out of at least two control modes of the head-up display (16),
- a data processing apparatus (20) according to claim 7,
wherein the first control element (22) and the second control element (24) are communicatively connected to the data processing apparatus (20), and
wherein the data processing apparatus (20) comprises a communication interface for causing one or more of adjusting a total size of a content (26) displayable by the head-up display (16), adjusting a size of a content element (42) displayable by the head-up display (16) and adjusting a zoom of a content element (42) displayable by the head-up display (16).

11. The system according to claim 10, wherein the first control element (22) and/or the second control element (24) are mountable on a steering wheel (12) of the vehicle (10).

12. The system according to claim 10 or 11, wherein the first control element (22) and the second control element (24) are formed by one integral control element (44) configured for generating both first data (D1) indicative of a user action and second data (D2) indicative of one control mode out of at least two control modes of the head-up display (16).

13. The system of claim 12, wherein the integral control element (44) comprises an actuation element (21) actuatable by the user (30) which is both rotatable and translatable and/or which is rotatable around two different axes of rotation and/or which is translatable in two different directions.

14. A vehicle (10) comprising a system (25) for controlling a head-up display (16) according to any one of claims 10 to 13.

15. The vehicle (10) according to claim 14, wherein the first control element (22) and the second control element (24) are mounted on a steering wheel (12) of the vehicle (10).

## Amended claims

### Amended claims in accordance with Rule 137(2) EPC.

1. A method for controlling a head-up display (16) of a vehicle (10), the method comprising
- obtaining first data (D1) indicative of a user action (S1),
- obtaining second data (D2) indicative of one control mode out of at least two control modes of the head-up display (16, S2),
- causing one or more of adjusting a total size of a content (26) displayable by the head-up display (16), adjusting a size of a content element (42) displayable by the head-up display (16), and adjusting a zoom of a content element (42) displayable by the head-up display (16) based on the first data (D1) and based on the second data (D2, S5),
**characterized in that** the first data (D1) comprises a direction information indicative of a direction of the user action, wherein the total size of the content (26) displayable by the head-up display (16), the size of the content element (42) displayable by the head-up display (16) and/or the zoom of the content element (42) displayable by the head-up display (16) are adjusted based on the direction information.

2. The method according to claim 1, wherein one control mode out of the at least two control modes is associated with adjusting the total size of the content (26) displayable by the head-up display (16) and/or
wherein one control mode out of the at least two control modes is associated with adjusting the size of the content element (42) displayable by the head-up display (16) and/or the zoom of the content element (42) displayable by the head-up display (16).

3. The method according to any one of the preceding claims, further comprising storing third data (D3) indicative of the total size of the content (26) displayable by the head-up display (16), the size of the content element (42) displayable by the head-up display (16) and/or the zoom of the content element (42) displayable by the head-up display (16, S3).

4. The method according to any one of the preceding claims, further comprising obtaining fourth data (D4) indicative of a user identity of a user (30) of the vehicle (10) and causing one or more of adjusting a total size of a content (26) displayable by the head-up display (26), adjusting a size of a content element (42) displayable by the head-up display (16), and adjusting a zoom of a content element (42) displayable by the head-up display (16, S4) based on the fourth data (D4).

5. The method according to any one of the preceding claims, wherein the content element (42) displayable by the head-up display (16) comprises a map (52) of a navigation system.

6. A data processing apparatus (20) comprising means for carrying out the method of any one of the preceding claims.

7. A computer program (38) comprising instructions which, when the computer program (38) is executed by a computer, cause the computer to carry out the method of claims 1 to 5.

8. A computer-readable storage medium (36) comprising instructions which, when executed by a computer, cause the computer to carry out the method of claims 1 to 5.

9. A system (25) for controlling a head-up display (16) of a vehicle (10), the system (25) comprising
- a first control element (22) for generating first data (D1) indicative of a user action,
- a second control element (24) for generating second data (D2) indicative of one control mode out of at least two control modes of the head-up display (16),
- a data processing apparatus (20) according to claim 6,
wherein the first control element (22) and the second control element (24) are communicatively connected to the data processing apparatus (20), and
wherein the data processing apparatus (20) comprises a communication interface for causing one or more of adjusting a total size of a content (26) displayable by the head-up display (16), adjusting a size of a content element (42) displayable by the head-up display (16) and adjusting a zoom of a content element (42) displayable by the head-up display (16).

10. The system according to claim 9, wherein the first control element (22) and/or the second control element (24) are mountable on a steering wheel (12) of the vehicle (10).

11. The system according to claim 9 or 10, wherein the first control element (22) and the second control element (24) are formed by one integral control element (44) configured for generating both first data (D1) indicative of a user action and second data (D2) indicative of one control mode out of at least two control modes of the head-up display (16).

12. The system of claim 11, wherein the integral control element (44) comprises an actuation element (21) actuatable by the user (30) which is both rotatable and translatable and/or which is rotatable around two different axes of rotation and/or which is translatable in two different directions.

13. A vehicle (10) comprising a system (25) for controlling a head-up display (16) according to any one of claims 9 to 12.

14. The vehicle (10) according to claim 13, wherein the first control element (22) and the second control element (24) are mounted on a steering wheel (12) of the vehicle (10).
